# FASCICULE DE BREVET EUROPEEN

(11) **EP 1 141 672 B1**
(45) Date de publication et mention de la délivrance du brevet: **06.10.2004**
(21) Numéro de dépôt: 99959469.0
(22) Date de dépôt: 09.12.1999
(51) Int. Cl.: G01M 3/28

(54) **DISPOSITIF DE DETECTION DE L'ETANCHEITE DE LA LIAISON ENTRE LES ELEMENTS D'UN DISPOSITIF DE JONCTION ETANCHE DE DEUX ENCEINTES ISOLEES DU MILIEU EXTERIEUR**
GERÄT ZUR DETEKTION VON UNDICHTIGKEITEN ZWISCHEN DEN ELEMENTEN EINER VERBINDUNGSEINHEIT UND ZWEI VON DER UMGEBUNG ISOLIERTEN KAMMERN
DEVICE FOR DETECTING TIGHTNESS OF THE LINK BETWEEN A SEALED ASSEMBLY OF TWO CHAMBERS INSULATED FROM OUTSIDE ENVIRONMENT

(30) Priorité: 11.12.1998 FR 9815850
(43) Date de publication de la demande: 10.10.2001
(73) Titulaire: Becton Dickinson France, 38800 Le Pont-de-Claix (FR)
(72) Inventeur: GRIMARD, Jean-Pierre, F-38450 Vif (FR); PORRET, Jean-Yves, F-38610 Gières (FR)
(74) Mandataire: Bratel, Gérard
(86) Numéro de dépôt international: PCT/FR1999/003079
(87) Numéro de publication internationale: WO 2000/036388

(56) Documents cités:
- GB-A- 2 177 166
- US-A- 3 974 937
- US-A- 4 883 637

## Description

Dispositif de détection de l'étanchéité de la liaison entre les éléments d'un dispositif de jonction étanche entre deux enceintes isolées du milieu extérieur, par exemple en vue du transfert du contenu de l'une des enceintes à l'autre enceinte.

Aux fins de la présente description, et de l'interprétation des revendications en annexe, par "étanchéité", ou "étanche", on entend la caractéristique selon laquelle une paroi quelconque séparant deux milieux empêche ou limite tout transfert au travers de ladite paroi, d'une ou plusieurs substances de référence, par exemple dites contaminantes.

Par "contaminante" ou "contamination", on entend la caractéristique selon laquelle une substance doit demeurer exclue, ou dans une quantité ou concentration limitée, dans un milieu donné. Il s'agit par exemple d'agents pathogènes, ou polluants, biologiques ou autres, mais aussi de simples particules solides, liquides, ou gazeuses, pouvant être mises en suspension dans tout milieu fluide.

Plus particulièrement, mais de manière non exclusive, la présente invention sera décrite ci-après par référence à une application de type médical ou biologique, requérant d'éviter ou limiter toute contamination, y compris par des particules, en provenance du milieu extérieur. A titre d'exemple, l'une des enceintes, dénommée ci-après "A", est constituée par une salle blanche ou stérile, donc fixe mais pouvant aussi être une enceinte déplaçable, et l'autre enceinte dénommée ci-après "B", est amovible et transportable, par exemple à usage unique, et contient un ou des objets, ou une charge à transférer, dans la position accouplée du dispositif de jonction étanche décrit ci-après, par le passage ainsi établi entre les deux enceintes, à savoir de l'enceinte transportable à l'enceinte fixe, par exemple pour approvisionner cette dernière en composants ou produits requis par une fabrication ou production en cours dans la salle blanche, ou à l'inverse pour évacuer des déchets ou des produits de ladite salle.

De telles situations se présentent aussi dans les domaines nucléaires, électroniques, pharmaceutiques, et médicaux.

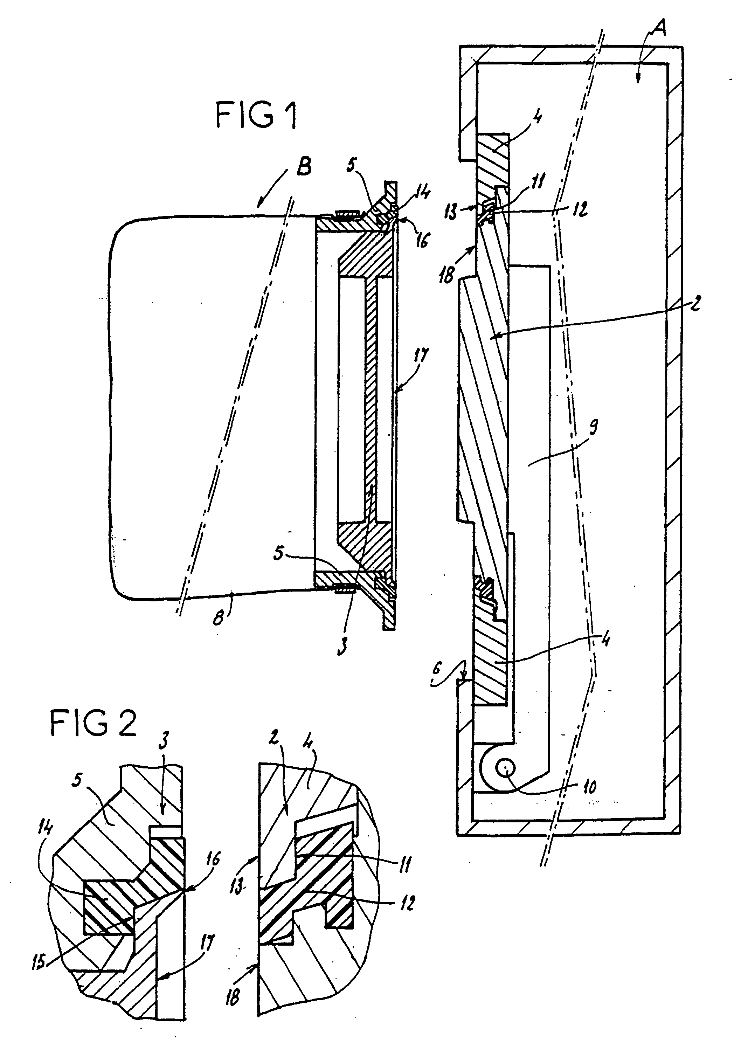

Avant toute explication sur le dispositif de détection de la présente invention, il est nécessaire de décrire, en référence aux figures 1 à 7 annexées, un dispositif de jonction étanche entre deux enceintes, conforme à l'état de la technique et dans lequel l'accouplement temporaire des portes 2 et 3 portées chacune par un cadre dormant en forme de bride, respectivement 4 et 5, forme une chambre "C". L'une de ces portes, à savoir celle 2, est disposée sur l'ouverture 6 d'une enceinte fixe "A", isolée du milieu extérieur, tandis que l'autre porte, à savoir celle 3, est disposée dans l'ouverture d'une autre enceinte "B", également isolée du milieu extérieur. L'invention concerne plus particulièrement, mais non exclusivement, l'application de ce dispositif à la liaison entre une enceinte stérile "A", et une enceinte transportable ou mobile "B", par exemple, constituée par un conteneur transportable formé par une enveloppe en matière synthétique 8, fixée sur la bride 5 de la porte 3.

Avec ce dispositif de jonction étanche, l'enceinte fixe "A" est fermée par une porte 2, en général circulaire, portée par un bras 9 articulé autour d'un axe 10, par exemple vertical, par rapport à la bride 4. Cette porte est munie de moyens d'étanchéité, tels qu'un joint annulaire compressible 12 coopérant avec une portée 11 de la bride 4 ou inversement.

De même, l'enceinte transportable "B" est fermée par une porte 3, en général circulaire mais de plus petite dimension diamétrale que l'ouverture 4a ménagée dans la bride 4 pour la porte 2 de l'enceinte fixe, pour pouvoir passer à travers cette ouverture. La porte 3 est munie de moyens d'étanchéité avec sa bride 5, à savoir un joint annulaire compressible 14 porté par la bride coopérant avec une portée 15, de la porte 3 (cf. fig.2), ou inversement.

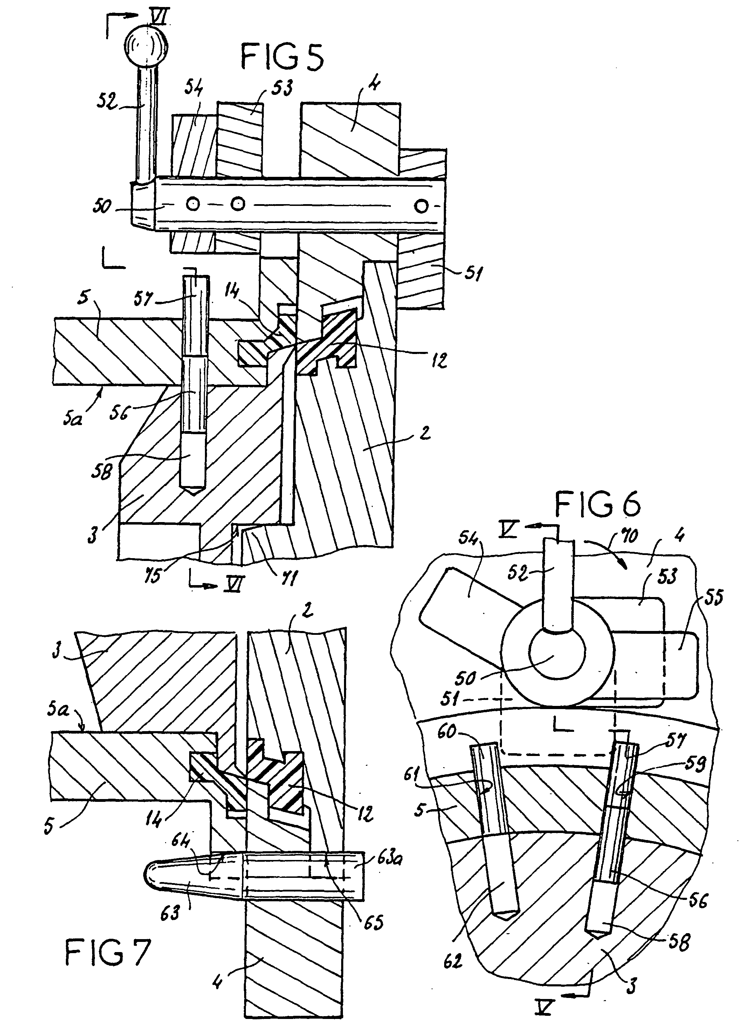

Chacune des portes 2 et 3 est également associée à des moyens de verrouillage en position fermée sur sa bride. Dans la forme d'exécution représentée aux figures 5 et 6, définies ci-après, ces moyens de verrouillage comprennent un arbre 50 monté libre en rotation dans un palier de la bride 4, un verrou rotatif 51, calé sur l'extrémité de l'arbre disposée dans l'enceinte A, et un levier 52 calé sur l'extrémité de l'arbre 50 qui dépasse à l'extérieur de l'enceinte A. Le verrou rotatif 51 est en forme de palette et peut occuper soit une position dans laquelle, comme montré figures 5 et 6, il plaque la porte 2 dans un embrèvement de la bride 4, soit une position dans laquelle il est radialement à l'extérieur de cette porte pour autoriser les mouvements de celle-ci.

L'arbre 50 porte également, calé sur lui et en allant de l'extérieur de la bride 4 vers le levier 52, d'une part, un autre verrou rotatif 53 apte à caler la bride 5 contre la bride 4, et d'autre part, deux doigts radiaux 54 et 55 aptes à coopérer avec les moyens de calage de la porte 3 sur sa bride 5. La figure 6 montre que ces différents éléments 51, 53, 54 et 55 sont décalés angulairement les uns par rapport aux autres et par rapport au levier 52.

Les moyens de verrouillage de la porte 3 sur sa bride 5 comprennent deux goupilles cylindriques 56, 57 engagées, à frottement serré et l'une à la suite de l'autre, respectivement, dans un alésage borgne 58 de la porte 3, et dans un alésage 59, coaxial au premier et ménagé radialement dans la bride 5. Les goupilles ne sont engagées que partiellement de manière que celle 57 fasse saillie à l'extérieur de la bride 5 et que celle 56 sécante et l'alésage interne 5a de la bride 5 recevant la porte 3 pour assurer le verrouillage de la porte sur sa bride. Si le conteneur est à usage unique, une autre goupille 60, visible figure 6, est disposée dans un alésage 61 de la bride aligné avec un alésage borgne 62 de la porte 3. Au départ, la goupille 60 est dans la position représentée figure 6, c'est-à-dire dépasse radialement de la bride 5 par une extrémité, tandis que son autre extrémité affleure l'alésage 5a sans pénétrer dans l'alésage borgne 62. Cette goupille 60 et celles coaxiales 56, 57 sont décalées angulairement de part et d'autre du plan diamétral contenant l'axe de rotation de l'arbre 50 et disposées dans les trajectoires circulaires des doigts 54 et 55 portés par cet arbre.

Un tel dispositif est en général associé à d'autres dispositifs similaires espacés angulairement sur la périphérie de la bride 4.

Enfin, pour faciliter le positionnement de la bride 5 de l'enceinte amovible ou conteneur B par rapport à celle 4 de l'enceinte fixe A, et comme montré à la figure 7, la bride 4 est solidaire de plusieurs doigts longitudinaux 63 saillant vers l'extérieur et aptes à coopérer avec des échancrures circulaires 64 ménagées dans la périphérie de la bride 5. Cependant le positionnement définitif est assuré par engagement d'un bossage central 71 de la porte 2 dans un embrèvement 75 de la porte 3. Chaque doigt peut aussi se prolonger en 63a à l'intérieur de l'enceinte fixe pour coopérer avec des échancrures 65 ménagées à la périphérie de la porte 2 pour faciliter le positionnement radial de celle-ci, par rapport à l'ouverture de la bride 4, en fin de son mouvement de fermeture.

En l'absence de tout transfert, chacune des portes 2 et 3 est verrouillée, sur sa bride 4 et 5, respectivement, par les verrous 51 et par les goupilles 56. Lorsqu'il s'agit de transférer le contenu d'une enceinte dans l'autre, et par exemple celui de l'enceinte transportable "B" dans l'enceinte fixe "A", la bride 5 de la porte 3 de l'enceinte transportable "B" est amenée, comme montré figure 1, contre celle 4 de la porte 2 de l'enceinte fixe "A", où elle est pré-positionnée par les doigts 63, puis définitivement par la coopération bossage 72 - embrèvement 75.

Le pivotement des leviers 52 dans le sens de la flèche 70 de figure 6 provoque simultanément le verrouillage de la bride 5 sur la bride 4, le déverrouillage de la porte 2 par rapport à sa bride 4 et le déverrouillage de la porte 3 par rapport à sa bride 5, par enfoncement des goupilles 56 et 57 au moyen des doigts 55. Cet enfoncement amène la zone de contact entre les goupilles 56, 57 au niveau de l'alésage 5a de la bride et libère ainsi la porte 3.

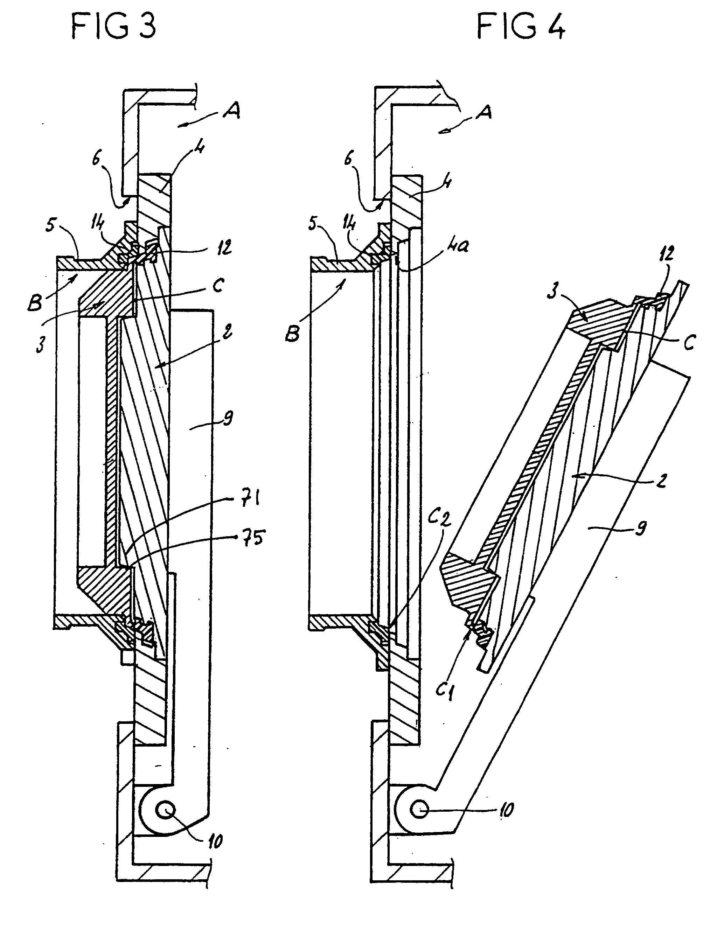

Dans cette position représentée à la figure 3, le joint annulaire 14 porté par la bride 5 est en contact d'étanchéité contre une portée circulaire 13 de la bride 4 (figure 2), en isolant ainsi du milieu extérieur, l'intérieur de la zone de jonction entre les deux enceintes "A" et "B". De même, l'autre joint annulaire 12 est en contact d'étanchéité avec la porte 3, et plus précisément avec une zone circulaire 16 de celle-ci, en isolant ainsi l'intervalle entre les deux portes 2 et 3, c'est-à-dire l'espace "C". Grâce à cela, les faces 17 et 18 des portes, jusqu'alors étaient en contact avec le milieu extérieur, sont désormais confinées dans cet espace C, en évitant ainsi que ces faces puissent contaminer ultérieurement le volume intérieur formé par la réunion étanche des deux enceintes "A" et "B". Dans le cas de transfert de produits contaminants, cet espace évite également que les deux faces 17 et 18 qui, après le transfert, seront à nouveau en contact avec l'extérieur, puissent contaminer le milieu extérieur.

Il ressort de ce qui précède que les moyens d'étanchéité, respectivement entre les deux brides 4 et 5 et entre les deux portes 2 et 3, définissent deux lignes dites critiques, circulaires et continues, d'étanchéité, lignes dont l'intégrité doit absolument être conservée pour éviter toute contamination par ou vers le milieu extérieur, de même que par ou vers l'espace "C". En pratique ces lignes, respectivement, intérieure C1 et extérieure C2, sont presque confondues.

Par "ligne critique", et comme l'homme du métier le sait bien, on entend une ligne à contamination résiduelle par le milieu extérieur aux deux enceintes mises en communication. Après l'accouplement et mise en communication des deux enceintes, cette ligne est susceptible de venir au contact de l'atmosphère ou fluide présent dans le passage établi entre les deux enceintes, ou au contact du ou des produits traversant ledit passage, et de les contaminer.

Pendant ces manoeuvres, des moyens de liaison complémentaire, décrits plus loin et équipant les faces extérieures des deux portes 2 et 3, s'accouplent et assurent une solidarisation de ces dernières, telle que les mouvements d'ouverture et de fermeture de la porte 2 de l'enceinte fixe "A" se transmettent à la porte 3 de l'enceinte transportable "B".

Après déverrouillage des deux portes 2 et 3, par rapport à leurs brides respectives 4, 5, il peut être procédé à la mise en communication des deux enceintes"A" et "B" par pivotement de la porte 2 vers l'intérieur de l'enceinte fixe "A", comme montré à la figure 4. Ce mouvement dégage l'ouverture 4a de la bride 4 et, par la liaison entre les deux portes 2 et 3, entraîne celle 3, qui traverse cette ouverture 4a et pénètre dans l'enceinte fixe "A".

Après transfert du contenu de l'enceinte transportable "B" dans l'enceinte fixe "A", les portes sont ramenées en position d'obturation.

Le verrouillage de la fermeture est ensuite assuré en faisant pivoter les leviers 52 dans le sens inverse de la flèche 70 jusqu'à enfoncement des goupilles 60 par les doigts 54, si cette enceinte B est à usage unique, puis en ramenant les leviers dans leur position médiane, représentée figure 6, pour permettre le verrouillage de la porte 2 sur sa bride 4 par les verrous rotatifs 51.

A ce stade, les deux enceintes A et B sont à nouveau fermées hermétiquement et l'enceinte B peut être retirée en entraînant la rupture des lignes critiques et la mise en contact avec l'extérieur des faces qui jusqu'alors étaient isolées.

Pour une description plus complète du dispositif de jonction étanche, on se réfèrera par exemple, au brevet français FR-A-2 721 289 au nom de IDC ISOLATEUR DENOMINATEUR COMMUN.

Ce mode de jonction étanche entre deux enceintes isolées du milieu extérieur donne entière satisfaction, mais peut être amélioré en ce qui concerne la garantie de l'intégrité des lignes critiques, donc de l'absence de contamination de l'enceinte fixe A lors des manoeuvres de transfert.

En effet, qu'il s'agisse de la ligne critique intérieure C1, figure 4, entre les deux portes 2 et 3, ou de la ligne critique extérieure C2, figure 4, entre les deux brides 4 et 5, il peut arriver qu'elle soit rompue, par exemple par des particules extérieures ou provenant de l'usure des joints, par une compression insuffisante des joints ou par un mauvais fonctionnement des moyens assurant la liaison verrouillée des brides l'une sur l'autre ou des moyens assurant la liaison des deux portes.

Cette rupture est d'autant plus grave que rien n'indique qu'elle s'est produite et qu'ainsi une seule opération de transfert peut contaminer soit les deux enceintes, et surtout l'enceinte fixe A, soit le milieu extérieur.

On connaît déjà des dispositifs de détection des fuites de moyens d'étanchéité. Ainsi le document GB-A-2 177 166 met en oeuvre deux réseaux pneumatiques dont l'un débouche entre deux joints en vis-à-vis et dont l'autre débouche dans l'intervalle entre deux joints juxtaposés. La détection s'effectue en injectant dans les réseaux une pression d'air, en stoppant l'injection, et en mesurant la pression résiduelle après une durée déterminée. Un tel dispositif n'est pas applicable dans un environnement stérile car le débit d'air peut chasser des particules non stériles d'une zone non stérile vers une zone stérile, en contribuant à la contamination de cette dernière.

La présente invention a pour objet de remédier à ces inconvénients et risques en fournissant un dispositif de détection de l'étanchéité de la liaison entre les brides d'un dispositif de jonction étanche entre deux enceintes isolées du milieu extérieur, ne provoquant aucune contamination de la zone critique.

Le dispositif de détection selon l'invention, comprend :
- deux gorges en anneau, respectivement intérieure et extérieure, ménagées dans la face extérieure de la bride de l'enceinte fixe A et débouchant dans la zone d'appui de la face en bout de la bride de l'enceinte transportable B ;
- un réseau de canaux ménagés dans la bride de l'enceinte fixe et reliant la gorge intérieure précitée à un raccord ;
- une pompe à vide, de préférence extérieure aux deux enceintes et dont le conduit d'aspiration est connecté audit raccord tandis que son circuit d'alimentation électrique comporte un organe de fermeture de ce circuit ;
- un capteur mesurant la valeur de la dépression dans le circuit pneumatique allant à la gorge et réagissant sur des moyens d'alarme, dès que la dépression n'atteint pas une valeur appropriée ;
- et un joint disposé dans la gorge extérieure.

Dès que la bride 5 de l'enceinte transportable B est positionnée et appliquée contre la bride 4 de l'enceinte fixe A, la mise en fonctionnement de la pompe à vide génère très rapidement, dans la gorge de la bride, une dépression qui s'étend entre les deux brides et entre la ligne critique extérieure et la zone d'appui du joint de la gorge extérieure. Cette dépression tend à plaquer davantage la bride en vis à vis et assure le maintien de cette bride, au moins pendant les manoeuvres préparatoires au transfert entre les deux enceintes, à savoir, verrouillage des deux brides l'une sur l'autre, liaison des portes entre elles, déverrouillage de chacune des portes en vis à vis de sa bride, et mise en communication des deux enceintes.

Si, pour l'une quelconque des raisons exposées précédemment, l'étanchéité de la zone soumise à dépression entre les deux brides n'est pas satisfaisante, le capteur détecte la carence et réagit sur les moyens d'alarme qui, soit informent l'opérateur qu'il faut interrompre la manoeuvre préalable à l'ouverture des portes, soit interrompent d'eux-mêmes cette manoeuvre.

Ainsi, à chaque manoeuvre d'accouplement, il est procédé à la vérification de l'intégrité de la ligne critique extérieure, mais aussi de l'étanchéité de la zone de protection la précédant entre les deux brides, ce qui évite tous risques de contamination des enceintes A et B par le milieu extérieur.

Dans une forme d'exécution de l'invention, le conduit amenant le vide au réseau de canaux ménagés dans la bride de l'enceinte fixe est également relié à une source d'air comprimé avec interposition d'une électrovanne multivoies apte, simultanément, à isoler le conduit de la source de vide et de la branche avec capteur et à mettre ce conduit en communication avec la source d'air comprimé pour envoyer dans la gorge intérieure un débit d'air sous pression favorisant la désolidarisation des brides.

Cet aménagement, simple et peu onéreux, simplifie la manoeuvre de séparation des portes des deux enceintes et évite, en cas de fausse manoeuvre, toute détérioration des joints, par des outils formant levier d'écartement des brides des enceintes.

Le dispositif selon l'invention est défini dans la revendication indépendante 1. Un mode particulier de réalisation de l'invention est défini dans la revendication dépendante 2.

L'invention sera mieux comprise à l'aide de la description qui suit en référence au dessin schématique annexé, représentant aux figures 1 à 7 un dispositif de jonction selon l'état de la technique et aux figures 8 à 11 une forme d'exécution du dispositif selon l'invention.

**Figures 1, 3 et 4** sont des vues en coupe diamétrale d'un dispositif de jonction étanche entre deux enceintes isolées du milieu extérieur, respectivement, lors du positionnement en vis-à-vis des portes des deux enceintes, après jonction verrouillée de ces portes, et après ouverture de ces deux portes.

**Figure 2** est une vue partielle en coupe, montrant à échelle agrandie, une forme d'exécution des moyens d'étanchéité entre les deux portes.

**Figure 5** est une vue partielle en coupe suivant V-V de figure 6 montrant, à échelle agrandie, une forme d'exécution des moyens de verrouillage des brides entre elles et des moyens de verrouillage de chaque porte sur sa bride.

**Figure 6** est une vue en coupe partielle suivant VI-VI de figure 5.

**Figure 7** est une vue partielle en coupe montrant à échelle agrandie une forme d'exécution des moyens de positionnement de l'enceinte amovible sur l'enceinte fixe.

**Figure 8** est une vue en coupe diamétrale d'un dispositif de jonction étanche, équipée d'une forme d'exécution du dispositif de détection selon l'invention, lorsque les deux portes sont en fin de phase de positionnement.

**Figure 9** est une vue en coupe similaire à la figure 8 mais, à échelle agrandie montrant les éléments du dispositif de détection de l'étanchéité.

Dans la description qui suit, les éléments communs à l'invention et à l'état de la technique explicité précédemment, porteront les mêmes numéros de référence, les éléments nouveaux étant référencés entre 30 et 49 et au-delà de 70.

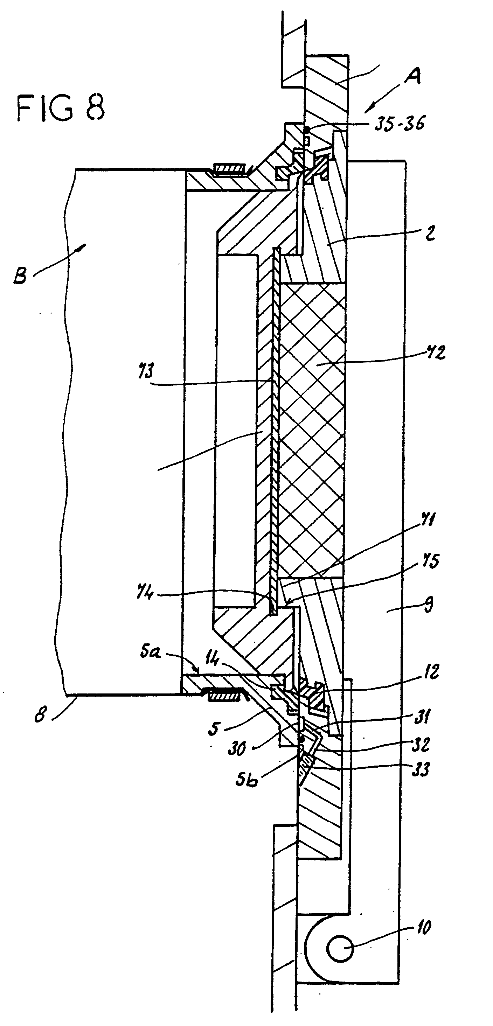

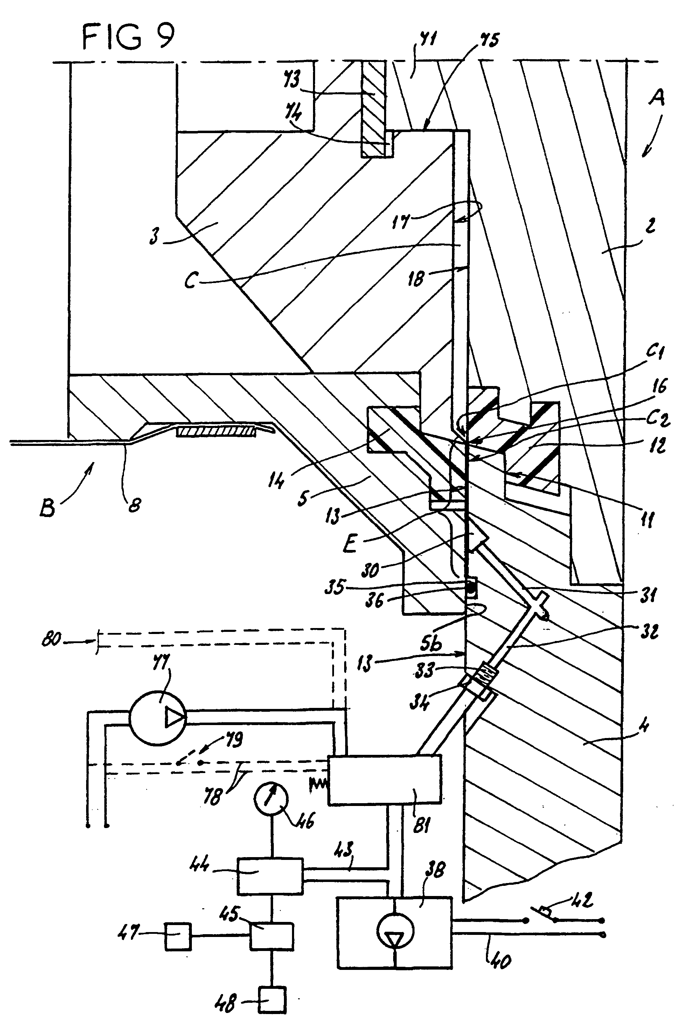

Comme montré aux figures 8 et 9, la bride 4 de l'enceinte fixe A comporte une gorge intérieure 30 qui, en forme d'anneau et par exemple circulaire, débouche de sa face 13 recevant l'appui de la face en bout 5b de la bride 5 de l'enceinte transportable B Cette gorge 30 communique avec un canal 31 ménagé dans la bride 4 et dans lequel débouche un autre canal 32 prolongeant un alésage fileté 33 pour un raccord 34.

Une gorge extérieure 35, ménagée dans la bride 4 et autour de la gorge 30, sert de logement à un joint 36, par exemple torique, apte à venir en contact avec la bride 5 pour limiter les fuites d'air. L'appui de ce joint 36 sur la face en bout 5b de la bride 5 délimite la limite extérieure de la zone E dont l'étanchéité est contrôlée entre les deux brides 4 et 5, zone dont la limite intérieure est délimitée par la ligne critique extérieure C2.

La figure 9 montre que le raccord 34 est relié par un conduit 37 à une pompe à vide 38, par exemple électrique, disposée de préférence hors des deux enceintes A et B.

Le circuit d'alimentation électrique 40 de cette pompe comporte un organe de fermeture, tel qu'un contacteur ou interrupteur 42, à actionnement manuel ou automatique. Ce contacteur est disposé de préférence hors des deux enceintes "A" et "B", et, par exemple, sur la face extérieure de l'enceinte fixe "A", à proximité des moyens de commande de verrouillage des brides.

Le conduit 37 est également relié, par une branche 43, à un capteur 44, de type vacuostat ou autre, mesurant la valeur de la dépression dans le circuit pneumatique, et réagissant, par des moyens pneumatiques ou électriques, sur un boîtier de commande 45. Le capteur 44 peut également être relié, à un appareil 46 de mesure de la dépression, de type mécanique ou électrique.

Le boîtier de commande 45 est relié, par des circuits électriques soit à une alarme 47, soit à un moyen 48, par exemple électromécanique ou électronique, interrompant la manoeuvre d'ouverture des enceintes.

Lorsque l'enceinte transportable B est positionnée contre la bride 4 de l'enceinte fixe A, l'actionnement manuel du contacteur 42, ou automatique, par exemple par le pivotement de l'un des leviers 52 de commande du verrouillage des brides et de déverrouillage des portes, met en fonctionnement la pompe à vide 38. Celle-ci génère une dépression qui, par la gorge 30 s'étend dans zone E et plaque la bride 5 contre la bride 4, avec un effort dépendant de la valeur de la dépression.

Il faut préciser que, avec une forte valeur de dépression, le plaquage pneumatique peut aussi assurer le verrouillage des deux brides en remplacement des verrous rotatifs 53, visibles figures 5 et 6.

Si la valeur de la dépression mesurée par le capteur 44, dans le circuit pneumatique allant de la pompe 38 à l'espace E, n'atteint pas une valeur de référence correspondant à l'étanchéité désirée dans cette zone E protégeant la ligne critique extérieure C2, mais aussi à l'étanchéité de cette ligne critique C2, ce qui résulte soit d'un mauvais positionnement, soit d'une fuite en raison de l'usure ou d'une présence indésirable, le capteur 44 réagit sur le boîtier 45 et déclenche l'alarme 47, pour informer l'opérateur qu'il ne faut pas poursuivre la manoeuvre de mise en communication entre les deux enceintes "A" et "B".

Le capteur 44 peut aussi réagir sur des moyens électriques ou électromécaniques interdisant cette mise en communication, par exemple en verrouillant la porte 2 de l'enceinte fixe A.

Ce capteur 44 garantit donc la préservation de l'état initial de ces enceintes ou du milieu extérieur, si ce sont ces enceintes qui sont contaminantes. Ce contrôle de l'intégrité de la ligne critique C2 et de l'étanchéité de sa zone de protection E, est particulièrement intéressant, puisqu'il améliore considérablement la sécurité de la manoeuvre de jonction étanche entre les enceintes "A" et "B".

Un autre avantage de l'utilisation du vide dans l'espace interne "E" est qu'il réduit. les risques de contamination de la zone stérile en cas de rupture accidentelle de l'étanchéité dans cet espace "E", par le fait que les surfaces contaminées, à savoir les faces extérieures sont en dépression par rapport à la zone stérile, et que, dans ces conditions, les éléments contaminants sont attirés par le débit d'air, non pas en direction de la zone stérile, mais vers la pompe à vide et, donc vers l'extérieur de ladite zone stérile, au besoin à travers un filtre ou autre organe de décontamination.

Le capteur 44 peut aussi être utilisé lors de la jonction des deux enceintes A et B, en particulier dans le cadre d'une procédure d'autotest consistant à mettre le circuit pneumatique allant à la gorge 30 en dépression; pour vérifier soit qu'il n'est pas bouché, soit que ledit capteur fonctionne correctement.

Aux figures 8 et 9, la liaison des deux portes 2 et 3 est assurée par exemple par des moyens magnétiques comprenant un aimant 72, disposé à l'intérieur d'un bossage central 71 de la porte 2 de l'enceinte fixe "A". Cet aimant est destiné à coopérer avec une plaquette métallique en matériau ferreux 73, maintenue dans une gorge 74 d'un embrèvement 75 ménagé dans la porte 3, en vis-à-vis du bossage central précité.

Cette liaison peut aussi être assurée par des moyens pneumatiques similaires à ceux décrits précédemment mais agissant entre les portes.

Dans la forme d'exécution représentée à la figure 9, le conduit 37 amenant le vide au raccord 34 est aussi relié à une source d'air sous pression 80, ou à une pompe à air 77, avec interposition d'une électrovanne multivoies 81 dont le circuit électrique 78 est équipé d'un contacteur, interrupteur ou autre moyen 79 de fermeture temporaire.

Après refermeture des portes 2,3 l'actionnement, manuel ou automatique, du contacteur 79 ferme le circuit électrique d'alimentation de l'électrovanne 81 qui, simultanément, isole le circuit provenant de la pompe à vide 38 et la branche 43 comprenant le capteur 44, et met en communication le conduit 37 avec la source d'air sous pression. Ce débit d'air sous pression se répartit dans la zone E, entre les deux brides 4 et 5 et facilite leur décollage.

Cette opération est particulièrement intéressante lorsque la force de liaison, magnétique ou autre, entre les deux portes 2 et 3 rend difficile la séparation de l'enceinte transportable B de l'enceinte fixe A, car elle évite le recours à des outils pour assurer cette désolidarisation avec le risque de détériorer le joint 36 et voir même les joints 12 et 14.

## Revendications

1. Dispositif de détection de l'étanchéité de la liaison temporaire entre les éléments d'un dispositif de jonction étanche entre deux enceintes A et B isolées du milieu extérieur, dans lequel :
- de première part, chaque enceinte, respectivement, A fixe ou déplaçable, et B, mobile ou transportable, est munie d'au moins une ouverture d'accès équipée d'une porte (2,3) coopérant, avec interposition de moyens d'étanchéité (12,14), avec une bride (4,5) formant cadre dormant, l'une des deux portes (2,3) étant articulée par rapport à sa bride (4,5) ;
- de deuxième part, les deux portes (2,3) sont munies de moyens de verrouillage sur leurs brides respectives (4,5) et de moyens de liaison complémentaires permettant, avant transfert du contenu d'une enceinte dans l'autre enceinte, et alors que les brides (4,5) sont verrouillées de manière étanche l'une à l'autre, de lier les deux portes (2,3) en formant, par contact de moyens d'étanchéité (12,16 et 13,14), un espace interne "C" isolant leurs faces (17,18) jusqu'alors au contact du milieu extérieur ;
- et de troisième part, sont prévus des moyens extérieurs de commande du verrouillage des brides (4,5) l'une sur l'autre, et des moyens extérieurs de commande du déverrouillage des portes (2,3) sur leur bride ;
**caractérisé en ce qu**'il comprend :
- deux gorges en anneau, respectivement intérieure (30) et extérieure (35) ménagées dans la face extérieure de la bride (4) de l'enceinte fixe (A) et débouchant dans la zone d'appui de la face en bout (5b) de la bride (5) de l'enceinte transportable (B) ;
- un réseau de canaux (31,32,33) ménagé dans la bride (4) de l'enceinte fixe (A) et reliant la gorge intérieure (30) à un raccord (34) ;
- une pompe à vide (38) extérieure aux enceintes (A,B) et dont le conduit d'aspiration (37) est connecté audit raccord, alors que son circuit d'alimentation électrique (40) comporte un organe (42) de fermeture de ce circuit ;
- un capteur (44) mesurant la valeur de la dépression dans le circuit pneumatique allant à la gorge intérieure (30) et réagissant sur des moyens d'alarme (47,48), dès que la dépression n'atteint pas une valeur appropriée ;
- et un joint (36) disposé dans la gorge extérieure (35).

2. Dispositif de détection selon la revendication 1, **caractérisé en ce que** le conduit (37) amenant le vide au réseau de canaux ménagés dans la bride (4) de l'enceinte fixe (A) est également reliée à une source d'air comprimé (80 ou 77) avec interposition d'une électrovanne multivoies (81) apte, simultanément, à isoler le conduit (37) de la source de vide (38) et de la branche (43) avec capteur (44) et à mettre ce conduit (37) en communication avec la source d'air comprimé (80 ou 77) pour envoyer dans la gorge intérieure (30) un débit d'air sous pression favorisant la désolidarisation des brides (4 et 5) des enceintes A et B.

## Patentansprüche

1. Vorrichtung zur Detektion der Dichtheit einer zeitweiligen Verbindung zwischen Elementen einer Vorrichtung mit einer dichten Verbindung zwischen zwei gegenüber der Außenwelt isolierten, abgeschlossenen Räume A und B, bei der
- erstens, in jedem der abgeschlossenen Räume, sei es A fest oder bewegbar bzw. B mobil oder transportierbar zumindest eine Zugangsöffnung ausgespart ist, die mit einer Tür (2, 3) versehen ist, die unter Zwischenschaltung von Dichtungsmitteln (12, 14) mit einem Flansch (4, 5) zusammenwirkt, der einen Türrahmen bildet, wobei eine der beiden Türen (2, 3) bezüglich ihres Flansches (4, 5) schwenkbar ist,
- zweitens, die beiden Türen (2, 3) an ihren jeweiligen Flanschen (4, 5) mit Mitteln zum Verriegeln und mit komplementären Mitteln zum Verbinden versehen sind, die es ermöglichen, vor dem Überführen des Inhalts des einen abgeschlossenen Raumes in den anderen abgeschlossenen Raum, und zwar dann, wenn die Flansche (4, 5) dicht miteinander verriegelt sind, die beiden Türen (2, 3) miteinander zu verbinden, wobei durch Berührung der Dichtungsmittel (12, 16 und 13, 14) ein innenliegender Raum "C" gebildet wird, der deren Stirnseiten (17, 18) isoliert, die bis dahin mit der Außenwelt in Kontakt standen, und
- drittens, externe Mittel zum Steuern der Verriegelung der Flansche (4, 5) untereinander und externe Mittel zum Steuern der Entriegelung der Türen (2, 3) von ihren Flanschen vorgesehen sind;
**dadurch gekennzeichnet, dass** sie Folgendes aufweist, nämlich
- zwei Ringnute, eine innere (30) bzw. eine äußere (35), die in der äußeren Stirnseite des Flansches (4) des festen abgeschlossenen Raums (A) angeordnet sind und die in die Auflagefläche der Stirnfläche (5b) des Flansches (5) des transportierbaren, abgeschlossenen Raums (B) münden;
- ein Netzwerk von Kanälen (31, 32, 33), die in dem Flansch (4) des festen, abgeschlossenen Raums (A) angeordnet sind und die die innere Nut (30) mit einem Anschlussstück (34) verbinden;
- eine Vakuumpumpe (38), die außerhalb der abgeschlossenen Räume (A, B) angeordnet ist, und deren Absaugleitung (37) mit dem Anschlussstück verbunden ist, wobei deren Stromversorgungsleitung (40) ein Organ (42) zum Schließen des Stromkreises aufweist;
- einen Messfühler (44), der den Wert des Unterdrucks in dem Pneumatikkreis misst, der in der inneren Nut (30) verläuft, und der auf Alarmmittel (47, 48) einwirkt, falls der Unterdruck nicht einen angemessenen Wert erreicht;
- und eine in der äußeren Nut (35) angeordnete Dichtung (36).

2. Vorrichtung zur Detektion nach Anspruch 1, **dadurch gekennzeichnet, dass** die Leitung (37), die das Vakuum in das Netzwerk der in dem Flansch (4) des festen abgeschlossenen Raums (A) angeordneten Kanäle führt, auch mit einer Druckluftquelle (80 oder 77) verbunden ist, und zwar unter Zwischenschalten eines Mehrweg-Elektroventils (81), das in der Lage ist, gleichzeitig die Leitung (37) von der Vakuumquelle (38) und von dem Strang (43) mit dem Messfühler (44) zu isolieren und diese Leitung (37) mit der Druckluftquelle (80 oder 77) in Verbindung zu bringen, um in die innere Nut (30) einen Strom unter Druck stehender Luft zu leiten, der die Trennung der Flansche (4 und 5) der abgeschlossenen Räume A und B fördert.

## Claims

1. Device for detecting whether the temporary connection between the elements of a device for the sealed connection of two chambers A and B isolated from the external medium is sealed, in which device;
- firstly, each chamber, respectively A which is stationary or displaceable and B which is movable or transportable, has at least one access opening equipped with a door (2, 3) cooperating, with the interposition of sealing means (12, 14), with a flange (4, 5) forming a stationary frame, one of the two doors (2, 3) being articulated to its flange (4, 5);
- secondly, the two doors (2, 3) have means of locking to their respective flanges (4, 5) and complementary connecting means which, before the contents of one chamber have been transferred into the other chamber, and while the flanges (4, 5) are locked together in a sealed manner, allow the two doors (2, 3) to be connected thereby forming, through contact of sealing means (12, 16 and 13, 14), an internal space "C" isolating their faces (17, 18) which were until then in contact with the external medium;
- and thirdly, external means of controlling the locking-together of the flanges (4, 5) and external means of controlling the unlocking of the doors (2, 3) from their flange are provided;
**characterized in that** it comprises:
- two grooves in a ring, respectively an inner groove (30) and an outer groove (35), formed in the external face of the flange (4) of the stationary chamber (A) and emerging in the bearing zone of the end face (5b) of the flange (5) of the transportable chamber (B);
- a network of ducts (31, 32, 33) formed in the flange (4) of the stationary chamber (A) and connecting the inner groove (30) to a coupling(34);
- a vacuum pump (38) outside the chambers (A, B) and the intake (37) of which is connected to the said coupling, while its electric power supply (40) circuit comprises a member (42) for closing this circuit;
- a sensor (44) measuring the value of the partial vacuum in the pneumatic circuit leading to the inner groove (30) and reacting on alarm means (47, 48) if ever the partial vacuum does not reach an appropriate value;
- and a seal (36) placed in the outer groove (35).

2. Detection device according to Claim 1, **characterized in that** the pipe (37) conveying the vacuum to the network of ducts formed in the flange (4) of the stationary chamber (A) is also connected to a source of compressed air (80 or 77) with the interposition of a multi-way electrically-operated valve (81) capable, simultaneously, of isolating the pipe (37) from the source of vacuum (38) and from the branch (43) with the sensor (44) and of placing this pipe (37) in communication with the source of compressed air (80 or 77) so as to send into the internal groove (30) a flow of pressurized air to encourage the flanges (4 and 5) of the chambers A and B to part.
